# EUROPEAN PATENT APPLICATION

(11) **EP 3 640 121 A1**
(43) Date of publication of application: **22.04.2020**
(21) Application number: 19199592.7
(22) Date of filing: 25.09.2019
(51) Int. Cl.: B62D 15/02, G08G 1/16, B60W 30/12

(54) **VEHICLE LANE-BIAS SYSTEM AND METHOD**

(30) Priority: 16.10.2018 US 201862746331 P; 17.10.2018 US 201816162789
(71) Applicant: Aptiv Technologies Limited, St. Michael (BB)
(72) Inventor: Sutorius, Mason B., Carmel, IN 46032 (US); Samiei, Ehsan, Kokomo, IN 46902 (US); Chia, Michael I., Cicero, IN 46034 (US); Hawes, Kevin J., Greentown, IN 46936 (US)
(74) Representative: Manitz Finsterwald Patent- und Rechtsanwaltspartnerschaft mbB

(57) **Abstract**

A lane-bias system (10) for a vehicle includes a perception-sensor (14) a steering-device (24) a controller-circuit (30). The perception-sensor (14) is configured to detect a lane-boundary (16) of a travel-lane (18) traveled by a host-vehicle (12) and detect a distance (20) to an other-vehicle (22) in the travel-lane (18) of the host-vehicle (12). The steering-device (24) is operable to control a lane-position (26) of the host-vehicle (12). The controller-circuit (30) is in communication with the perception-sensor (14) and the steering-device (24). The controller-circuit (30) is configured to operate the steering-device (24) to steer the host-vehicle (12) to an off-center-position (40) within the travel-lane (18) in response to a determination that the distance (20) to the other-vehicle (22) is less than a threshold-distance (42) and/or that the size (70) of the other-vehicle (22) is larger than a threshold-size (72).

## Description

### TECHNICAL FIELD OF INVENTION

This disclosure generally relates to a lane-bias system for a vehicle, and more particularly relates to a system that operates a steering-device to steer the host-vehicle to an off-center-position within the travel-lane in response to a determination that the distance to the other-vehicle is less than a threshold-distance.

### BRIEF DESCRIPTION OF DRAWINGS

The present invention will now be described, by way of example with reference to the accompanying drawings, in which:
Fig. 1 is a diagram of a lane-bias system for operating a vehicle in accordance with one embodiment;
Fig. 2 is a scenario encountered by the system of Fig. 1 in accordance with one embodiment; and
Fig. 3 is a method of operating the system of Fig. 1 in accordance with one embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

'One or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

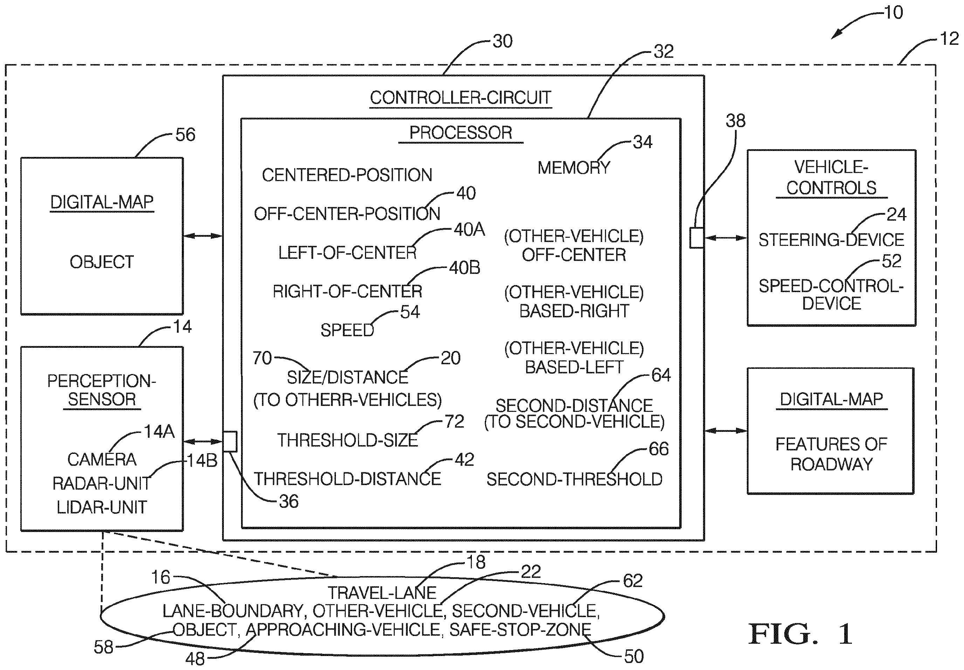

Fig. 1 illustrates a non-limiting example of a lane-bias system 10, hereafter often referred to as the system 10, for a vehicle, e.g. a host-vehicle 12. The host-vehicle 12 may be characterized as an automated vehicle or an autonomous vehicle, and may be referred to by some as an automated-mobility-on-demand (AMOD) type of vehicle. As used herein, the term automated vehicle may apply to instances when the host-vehicle 12 is being operated in an automated-mode, i.e. a fully autonomous mode, where a human-operator (not shown) of the host-vehicle 12 may do little more than designate a destination to operate the host-vehicle 12. However, full automation is not a requirement. It is contemplated that the teachings presented herein are useful when the host-vehicle 12 is operated in a partially manual-mode where the degree or level of automation include providing operational assistance or an audible or visual notification/warning to the human-operator who is generally in control of the steering, accelerator, and brakes of the host-vehicle 12.

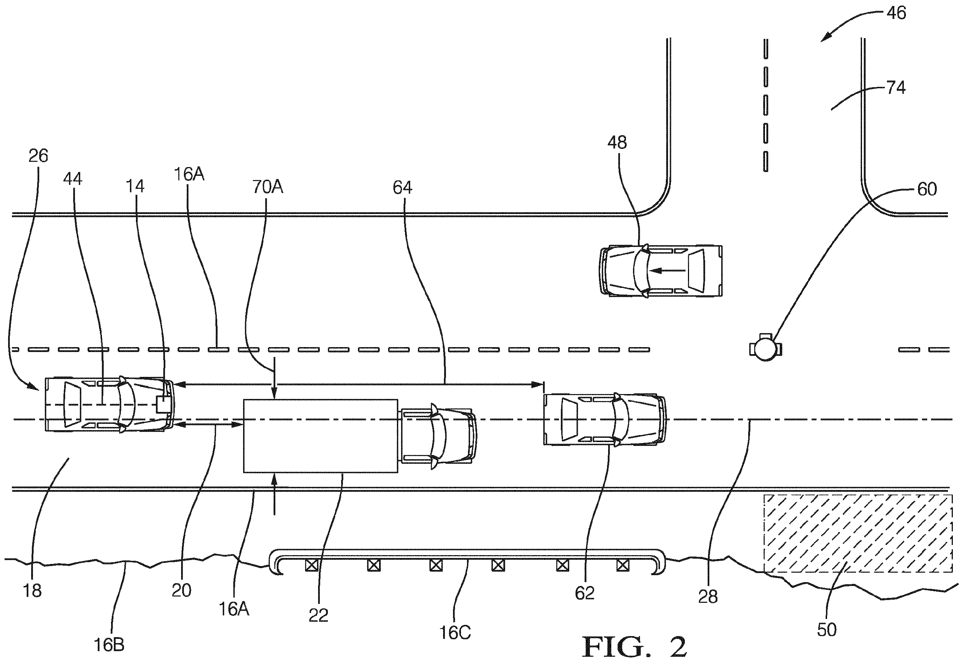

The system 10 includes a perception-sensor 14 configured to detect a lane-boundary 16 of a travel-lane 18 traveled by the host-vehicle 12. The perception-sensor 14 may include or consist of, but is not limited to, one or more instances of a camera, a radar, a lidar, or any combination thereof. The one or more devices that make up the perception-sensor 14 may be co-located in a single housing, or may be distributed at different locations on the host-vehicle 12. The lane-boundary 16 may include or consist of, but is not limited to, one or more instances of a lane-marking 16A (Fig. 2), e.g. a dashed or solid line, a road-edge 16B, a curb, and/or a barrier or guard-rail 16C. The perception-sensor 14 is also configured to or usable to detect a distance 20 to an other-vehicle 22 (e.g. - a large-truck) in the travel-lane 18 behind or forward of the host-vehicle 12. Additionally, the perception-sensor 14 may also be configured or operable to detect a size 70 of the other vehicle 22, which may include any one or combination of a height, a length, or a width 70A (Fig. 2) of the other-vehicle 22. As will be explained in more detail below, the system 10 described herein is an improvement over prior systems because the system 10 steers the host-vehicle 12 to a left-of-center or right-of-center lane position as needed to allow the perception-sensor 14 of the host-vehicle 12 a better view or line-of-sight past the other-vehicle 22, i.e. to 'see around' the other-vehicle 22, which is behind or in front of the host-vehicle 12.

The system 10 includes a steering-device 24 operable to control a lane-position 26 (Fig. 2) of the host-vehicle 12, i.e. the position of the host-vehicle 12 relative to an imaginary-centerline 28 (Fig. 2) of the travel-lane 18. The imaginary-centerline 28 is not to be confused with a visible painted or taped centerline of a roadway that. By way of example and not limitation, the imaginary-centerline 28 will typically be half way between the lane-markings 16A that generally define the boundaries of the travel-lane 18. The imaginary-centerline 28 is presented to provide a frame of reference for discussion regarding the lane-position 26 of the host-vehicle 12. Suitable devices for computer controlled steering of automated vehicles are known and are commercially available. The steering-device 24 may be part of a collection of devices that form vehicle-controls that are generally computer operated to control the speed and/or direction of the host-vehicle 12. The vehicle-controls may include features for an operator or passenger (not shown) of the host-vehicle 12 to override autonomous-operation of the host-vehicle 12, where the features may include any combination of, but are not limited to, a hand-wheel, an accelerator-pedal, a brake pedal, and/or some other control input device such as a joystick or touch-screen, as will be recognized by those in the art.

The system 10 includes a controller-circuit 30 in communication with the perception-sensor via an input 36 and the steering-device via an output 38. The communication may be by way of, for example, wires, optical-fiber, or wireless communication, and the input 36 and the output 38 may be configured for analog and/or digital signals, as will be recognized by those in the art. The controller-circuit 30, hereafter sometimes referred to as the controller 30, may include one or more instances of a processor 32 such as one or more instances of a microprocessor or other control circuitry such as analog and/or digital control circuitry including an application specific integrated circuit (ASIC) for processing data as should be evident to those in the art.

While the system 10 described herein is generally described in terms of having a single instance of the controller 30, it is recognized that the functions of the controller 30 may be shared or distributed among several instances of controllers that are each configured for some specific task. Hereafter, any reference to the controller 30 being configured for something is to also be interpreted as suggesting that the processor 32 may also be configured for the same thing. It is also recognized that there may be multiple instances of processors in any instance of the controller 30. The controller 30 may include memory 34, i.e. non-transitory computer-readable storage-medium, including non-volatile memory, such as electrically erasable programmable read-only memory (EEPROM) for storing one or more routines, thresholds, and captured data. The memory 34 may be part of the processor 32, or part of the controller 30, or separate from the controller 30 such as remote memory stored in the cloud. The one or more routines may be executed by the controller 30 or the processor 32 to perform steps for determining, for example, the presence of and the distance 30 to the other-vehicle 22 based on signals received by the controller 30 from the perception-sensor 14.

The controller-circuit 30 is configured to (e.g. programmed to) operate the steering-device 24 to steer the host-vehicle 12 to an off-center-position 40 within the travel-lane 18 in response to a determination that the distance 20 to the other-vehicle 22 is less than a threshold-distance 42, e.g. five-meters (5m), and/or a determination that the size 70 (height, width 70A, and/or length) is greater than a threshold-size 72. It is contemplated that the threshold-distance 42 and/or the threshold-size 72 may be varied based on the speed of the host-vehicle 12 and/or the size (height and/or width) of the field-of-view of the perception-sensor 14 that is blocked by the other-vehicle 22. That the host-vehicle 12 is steered to an off-center-position 40 (i.e. biased-position either left-of-center or right-of-center) means that the host-vehicle 12 is deliberately steered such that a mid-line 44 (Fig. 2) of the host-vehicle 12 is not substantially aligned with (i.e. directly over) the imaginary-centerline 28 of the travel-lane 18. The direction and amount of bias may be dependent on the relative position of the other-vehicle 22 and/or the objective of steering to the off-center-position 40, e.g. to 'see' an on-coming vehicle.

As used herein, the phrase "within the travel-lane 18" means that a majority (i.e. more than half) of the host-vehicle 12 is in the travel-lane 18. That is, the tires (not shown) of the host-vehicle 12 may touch or momentarily cross-over a lane-marking 16A so the perception-sensor 14 can see past the other-vehicle 22, but the mid-line 44 of the host-vehicle 12 does not cross-over the lane-marking 16A as would be the case if the host-vehicle 12 were changing lanes. If the tires of the host-vehicle 12 cross-over the lane-marking 16A, it is anticipated that the host-vehicle 12 will eventually be steered back toward the imaginary-centerline 28. If the midline of the host-vehicle 12 passes over the lane-marking 16A, then the host-vehicle 12 is no longer within the travel-lane 18.

Fig. 2 illustrates a non-limiting example of a scenario 46 that the system 10 may encounter while installed on the host-vehicle 12. When the host-vehicle 12 is steered by the controller 30 or the processor 32 to a centered-position, the mid-line 44 is generally (allowing for normal uncontrollable deviations caused by, for example, irregularities with the travel-lane 18 and/or gusts of wind) aligned with or overlies the imaginary-centerline 28 of the travel-lane 18. The centered-position is where the host-vehicle 12 will be steered most of the time, particularly when the host-vehicle 12 is not closely (e.g. closer than the threshold-distance 42) following or being closely followed by an instance of the other-vehicle 22. However, when the host-vehicle 12 is closely following an instance of the other-vehicle 22 as shown in Fig. 2, or is being closely followed by an instance of the other-vehicle 22 (not shown), then the host-vehicle 12 may be steered to an off-center-position 40 so the perception-sensor 14 can 'see past' or 'see around' the other-vehicle 22. While Fig. 2 shows the perception-sensor 14 as being mounted at the front of the host-vehicle 12, it is contemplated that devices that are part of the perception-sensor 14 may also be mounted at the rear of the host-vehicle to detect instances of other vehicles behind the host-vehicle 12.

When the host-vehicle 12 is steered to the off-center-position 40, the lane-position 26 may be characterized as left-of-center 40A when the perception-sensor 14 is used to detect an approaching-vehicle 48. Fig. 2 shows the approaching-vehicle 48 as an instance of on-coming traffic approaching from in front of the host-vehicle 12. In this situation, the perception-sensor 14 can detect the approaching-vehicle 48 at a greater distance by being left-of-center. It is also contemplated that the host-vehicle 12 may be steered to left-of-center 40A so the perception-sensor 14 can better detect (i.e. see) an instance of an over-taking vehicle (not shown) approaching from behind the host-vehicle 12 if the view to that over-taking is blocked by an instance of another vehicle behind the host-vehicle 12, or when the host-vehicle 12 is approaching an instance of a left-side-road 74 where another vehicle (not shown) may be approaching the travel-lane 18. That is, the host-vehicle 12 is steered to the left side of the travel-lane so the perception-sensor has a better line-of-sight or view of things on the left side of or to the left of the travel-lane 18.

Alternatively, when the host-vehicle 12 is steered to the off-center-position 40, the lane-position 26 may be characterized as right-of-center 40B when the perception-sensor 14 is used to detect something to the right of the travel-lane 18, a safe-stop-zone 50 for example, or to look for vehicles approaching the travel-lane on a right-side-road (not shown). That is, the host-vehicle 12 is steered to the right side of the travel-lane so the perception-sensor has a better line-of-sight or view of things on the right side of or to the right of the travel-lane 18.

It is further contemplated that the other-vehicle 22 may be programmed (if autonomously operated) or the driver (if manually operated) may decide or be trained to steer off-center to allow the host-vehicle 12 a view of some object or another vehicle that is hidden by the other-vehicle 22 or is being followed closely by any vehicle. Accordingly, the controller-circuit 30 (or the processor) may be configured to determine when the other-vehicle 22 is off-center, e.g. biased-left or biased-right, in the travel-lane 18, and operate the steering-device 24 to steer the host-vehicle 12 to an off-center-position 40 characterized as opposite the other-vehicle 22 in response to a determination that the other-vehicle 22 is off-center. As shown in Fig. 2, the other-vehicle 22 is biased to the right, so in response the host-vehicle may be steered to the left-of-center 40A. It is also contemplated that the response to the other-vehicle 22 being off-center by the host-vehicle may be initiated even if the distance 20 is not less than the threshold-distance 42. That is, the off-center-position may be characterized (or selected) as left-of-center 40A when the other-vehicle 22 is off-center and is characterized as biased-right. Similarly, the off-center-position 40 of the host-vehicle 12 is characterized or selected as right-of-center 40B when the other-vehicle 22 is off-center and is characterized as biased-left.

Returning to Fig. 1, the system 10 may also include a speed-control-device 52 operable to control a speed 54 of the host-vehicle 12. The speed-control-device 52 may consist of or include any combination of, but not limited to, an accelerator-control, brakes and/or an electric motor configured to provide both propulsion and braking, as will be recognized by those in the art. It follows that the controller-circuit 30 may be configured to operate the speed-control-device 52 to reduce the speed 54 of the host-vehicle 12 in response to a determination that the distance 20 to the other-vehicle 22 is less than a threshold-distance 42 and/or the size 70 of the other-vehicle 22 is greater than the threshold-size 72. That is, the speed 54 may be reduced to increase the distance 20 when the other-vehicle 22 is in front of the host-vehicle 12 so that the perception-sensor 14 can have an improved view or line of sight to other vehicles or objects.

The system 10 may also include a digital-map 56 that indicates a location of an object 58 such as, but not limited to, a traffic-signal 60, the left-side-road 74, the guard-rail 16C, a road-marking, or a shoulder or curb of roadway. As used herein, the object 58 is generally permanent, i.e. something that would be typically noted on a data-base used for autonomous operation of a vehicle. By accessing the digital-map 56, the appearance of the object 58 can be anticipated by steering the host-vehicle 12 to an off-center-position 40 so that the perception-sensor 14 can more readily detect the object 58. That is, the controller-circuit 30 or the processor 32 may be configured to access the digital-map 56 to determine the expected location of yet undetected instances of the object 58, and operate the steering-device 24 to steer the host-vehicle 12 to an off-center-position 40 where the perception-sensor 14 has a view of the object 58.

The system 10 may include a location-detector (not shown) such as a global-position-system (GPS) receiver used to determine the location (e.g. GPS coordinates) of the host-vehicle 12 so where to 'look' on the digital-map 56 can be determined. However, this is not a requirement. Alternatively, the perception-sensor 14 may be used to detect a variety of instances of the object 58, and the location of the host-vehicle 12 on the digital-map 56 may be determined using pattern matching algorithms like those used for fingerprint matching.

In one embodiment, the perception-sensor 14 includes a camera 14A and a radar-unit 14B. It has been observed that the radar-unit 14B can sometimes detect the presence of a second-vehicle 62 (Fig. 2) traveling ahead of an instance of the other-vehicle 22 which is traveling ahead of the host-vehicle. It is presumed that radar-signals emitted by the radar-unit 14B pass under the other-vehicle 22 and are subsequently reflected by the second-vehicle 62, and those reflected signals pass back under the other-vehicle 22 and are detected by the radar-unit 14B. That is, even though the line-of-site from the camera 14A to the second-vehicle 62 is blocked by the other-vehicle 22, the presence and a second-distance 64 to the second-vehicle can be known. Such information may be useful, for example, if the host-vehicle 12 is about to pass the other-vehicle 22.

It follows that the controller-circuit 30 may be configured to determine the second-distance 64 to the second-vehicle 62 based on reflected radar-signals detected by the radar-unit 14B, where the second-vehicle 62 is characterized as traveling in the travel-lane 18 of the other-vehicle 22 and the host-vehicle 12. That is, a view by the camera 14A of the second-vehicle 62 is characterized as blocked by the other-vehicle 22. If the second-vehicle 62 is the cause of the other-vehicle 22 slowing, i.e. passing the other-vehicle 22 is contemplated, a camera view to the second-vehicle 62 may reveal that a turn-signal of the second-vehicle 62 is activated indicating that the second-vehicle 62 is preparing to turn onto the left-side-road 74, so passing is not advisable. Accordingly, the controller 30 may be further configured to operate the steering-device 24 to steer the host-vehicle 12 to an off-center-position 40 where the camera has a view of the second-vehicle 62 in response to a determination that the second-distance 64 (determined using the radar-unit 14B) to the second-vehicle 62 is less than a second-threshold 66, e.g. twenty-five-meters (25m). It is contemplated that the second-threshold 66 may be varied in accordance with, but not limited to, the speed of the host-vehicle 12, and/or an estimated length of the other-vehicle 22.

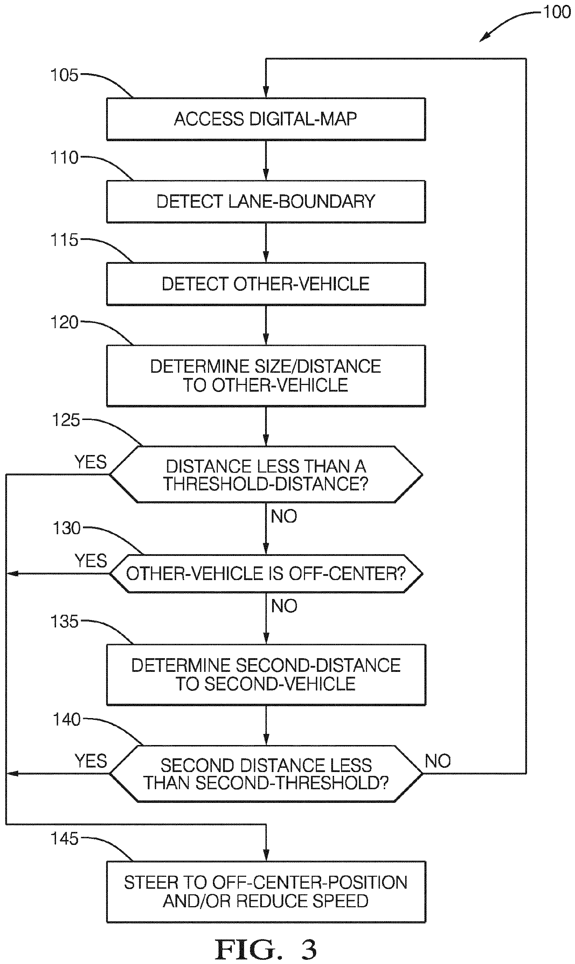

Fig. 3 illustrates a non-limiting example of a method 100 of operating a lane-bias system 10 for a vehicle, e.g. the host-vehicle 12. Alternative methods suitable for operating the system 10 may add steps, remove steps, or re-order steps from those shown in Fig. 3 and described below.

Step 105, ACCESS DIGITAL-MAP, may include the controller 30 accessing a digital-map 56 that indicates a location of an object 58 relative to the location of the host-vehicle 12. The digital-map 56 may be stored on-board the host-vehicle 12 as suggested by Fig. 1, or may be all or in-part stored remotely (e.g. in the cloud) and access using a transceiver such as a Wi-Fi or cellular-network transceiver.

Step 110, DETECT LANE-BOUNDARY, may include detecting by the controller, with data from a perception-sensor 14, a lane-boundary 16 of a travel-lane 18 traveled by the host-vehicle 12. Algorithms for processing data from the perception-sensor 14 to detect the lane-boundary 16 are well-known.

Step 115, DETECT OTHER-VEHICLE, may include the controller 30 processing data from the perception-sensor 14 which may include identifying the other-vehicle 22 as tracked target and/or classifying the tracked-target as an instance of a vehicle, i.e. the other-vehicle 22.

Step 120, DETERMINE SIZE / DISTANCE TO OTHER-VEHICLE, may include the controller 30 detecting or determining, with data from the perception-sensor 14, a distance 20 to an other-vehicle 22 and/or a size 70 of the other-vehicle 22, which is also traveling in the travel-lane 18 of the host-vehicle 12. As is known, the radar-unit 14B or the lidar-unit are both useful to determine the distance 20 to the other-vehicle 22. If the distance 20 is known, then an image of the other-vehicle 22 rendered by camera can be used determine a height and/or width of the other-vehicle 22. That is, step 120 may include the controller 30 detecting or determining, with data from the perception-sensor 14, a size 70 (e.g. length, width 70A, and/or height) of an other-vehicle 22 also traveling in the travel-lane 18 of the host-vehicle 12.

Step 125, DISTANCE LESS THAN A THRESHOLD-DISTANCE?, may include determining, by the controller-circuit 30, that the distance 20 to the other-vehicle 22 is less than a threshold-distance 42 by way of a value comparison, and determining which logic path (YES or NO) the method 100 will follow based on that comparison. Step 125 may also include comparing the size 70 to the threshold-size 72, and following the NO path if the size 70 is less than the threshold-size 72, or the YES path if not less than.

Step 130, OTHER-VEHICLE IS OFF-CENTER?, may include the controller 30 determining with data from the perception-sensor 14, e.g. the camera 14A, that the other-vehicle 22 is off-center (either left or right of center) in the travel-lane, and determining which logic path (YES or NO) the method 100 will follow based on that determination.

Step 135, DETERMINE SECOND-DISTANCE TO SECOND-VEHICLE, may include the controller 30 determining with data from the radar-unit 14B a second-distance 64 to a second-vehicle 62 detected by the radar-unit 14B. The second-vehicle 62 is traveling in the travel-lane 18 of the other-vehicle 22, and a view of the second-vehicle 62 by the camera 14A is characterized as blocked by the other-vehicle 22

Step 140, SECOND-DISTANCE LESS THAN SECOND-THRESHOLD?, may include the controller 30 comparing the value of the second-distance 64 to the value of a second-threshold 66, and determining which logic path (YES or NO) the method 100 will follow based on that comparison.

Step 145, STEER TO OFF-CENTER-POSITION AND/OR REDUCE SPEED, may include steering, by the controller-circuit 30 operating a steering-device 24, the host-vehicle 12 to an off-center-position 40 within the travel-lane 18 and/or reducing the speed 54 by operating the speed-control-device 52 of the host-vehicle 12 in response to a determination that the distance 20 to the other-vehicle 22 is less than a threshold-distance 42, i.e. the host-vehicle 12 is too close to the other-vehicle to be able to see around the host-vehicle 12. The off-center-position 40 may be characterized or selected as left-of-center 40A if/when the perception-sensor 14 is used to detect an approaching-vehicle 48, and the off-center-position 40 may be characterized or selected as right-of-center 40B if/when the perception-sensor 14 is used to detect a safe-stop-zone 50.

Described herein is a first device 30 that includes one or more processors 32; memory 34; and one or more programs 105-145 stored in memory 34. The one or more programs 105-145 including instructions for performing all or part of the method 100. Also, described herein is a non-transitory computer-readable storage-medium 34 that includes one or more programs 105-145 for execution by one or more processors 32 of a first device 30, the one or more programs 105-145 including instructions which, when executed by the one or more processors 32, cause the first device to perform all or part of the method 100.

Accordingly, a lane-bias system (the system 10), a controller 30 for the system 10, and a method 100 of operating the system 10 are provided. The host-vehicle 12 is advantageously steered to an off-center-position 40 within the travel-lane 18 when doing so is helpful for the perception-sensor 14 to see around an other-vehicle 22 traveling in the same travel-lane because the other-vehicle 22 is too close, i.e. closer than the threshold-distance 42, and/or the other-vehicle 22 is too large, i.e. larger than the threshold-size 72.

While this invention has been described in terms of the preferred embodiments thereof, it is not intended to be so limited, but rather only to the extent set forth in the claims that follow.

## Claims

1. A controller-circuit (30) for a lane-bias system (10) for a vehicle, said controller-circuit (30) comprising:
an input (36) configured to communicate with a perception-sensor (14) configured to detect a lane-boundary (16) of a travel-lane (18) traveled by a host-vehicle (12) and detect a distance (20) to an other-vehicle (22) and/or a size (70) of the other-vehicle (22) which is in the travel-lane (18) of the host-vehicle (12);
an output (38) configured to communicate with a steering-device (24) operable to control a lane-position (26) of the host-vehicle (12); and
a processor (32) in communication with the perception-sensor (14) and the steering-device (24), said processor (32) configured to operate the steering-device (24) to steer the host-vehicle (12) to an off-center-position (40) within the travel-lane (18) in response to a determination that the distance (20) to the other-vehicle (22) is less than a threshold-distance (42) and/or the size (70) of the other-vehicle (22) is greater than a threshold-size (72).

2. The controller-circuit (30) in accordance with any of the previous claims, wherein the off-center-position (40) is characterized as left-of-center (40A) when the perception-sensor (14) is used to detect an approaching-vehicle (48).

3. The controller-circuit (30) in accordance with any of the previous claims, wherein the off-center-position (40) is characterized as right-of-center (40B) when the perception-sensor (14) is used to detect a safe-stop-zone (50).

4. The controller-circuit (30) in accordance with any of the previous claims, wherein the processor (32) configured to determine when the other-vehicle (22) is off-center in the travel-lane (18); and operate the steering-device (24) to steer the host-vehicle (12) to an off-center-position (40) characterized as opposite the other-vehicle (22) in response to a determination that the other-vehicle (22) is off-center.

5. The controller-circuit (30) in accordance with any of the previous claims, wherein the controller-circuit (30) includes
a digital-map (56) that indicates a location of an object (58); and
the processor (32) is configured to operate the steering-device (24) to steer the host-vehicle (12) to an off-center-position (40) where the perception-sensor (14) has a view of the object (58).

6. The controller-circuit (30) in accordance with any of the previous claims, wherein the perception-sensor (14) includes
a camera (14A) and a radar-unit (14B); and
the processor (32) is configured to determine a second-distance (64) to a second-vehicle (62) detected by the radar-unit (14B) traveling in the travel-lane (18) of the other-vehicle (22), wherein a view of the second-vehicle (62) is characterized as blocked by the other-vehicle (22); and operate the steering-device (24) to steer the host-vehicle (12) to an off-center-position (40) where the camera (14A) has a view of the second-vehicle (62) in response to a determination that a second-distance (64) to the second-vehicle (62) is less than a second-threshold (66).

7. A lane-bias system (10) for a vehicle, said system (10) comprising:
a perception-sensor (14) configured to detect a lane-boundary (16) of a travel-lane (18) traveled by a host-vehicle (12) and detect a distance (20) to an other-vehicle (22) and/or a size (70) of the other-vehicle (22) which is in the travel-lane (18) of the host-vehicle (12);
a steering-device (24) operable to control a lane-position (26) of the host-vehicle (12); and
a controller-circuit in accordance with any of claims 1-6.

8. A method (100) of operating lane-bias system (10) for a vehicle, said method (100) comprising:
detecting, with a perception-sensor (14), a lane-boundary (16) of a travel-lane (18) traveled by a host-vehicle (12);
detecting, with a perception-sensor (14), a distance (20) to an other-vehicle (22) and/or a size (70) of the other-vehicle (22) which is in the travel-lane (18) of the host-vehicle (12);
determining, by a controller-circuit (30), that the distance (20) to the other-vehicle (22) is less than a threshold-distance (42); and
steering, by the controller-circuit (30) operating a steering-device (24), the host-vehicle (12) to an off-center-position (40) within the travel-lane (18) in response to a determination that the distance (20) to the other-vehicle (22) is less than a threshold-distance (42) and/or the size (70) of the other-vehicle (22) is greater than a threshold-size (72).

9. The method (100) in accordance with claim 8, wherein the off-center-position (40) is characterized as left-of-center (40A) when the perception-sensor (14) is used to detect an approaching-vehicle (48).

10. The method (100) in accordance with any of the previous claims, wherein the off-center-position (40) is characterized as right-of-center (40B) when the perception-sensor (14) is used to detect a safe-stop-zone (50).

11. The method (100) in accordance with any of the previous claims, wherein the method (100) includes
determining that the other-vehicle (22) is off-center in the travel-lane (18); and ope
rating the steering-device (24) to steer the host-vehicle (12) to an off-center-position (40) characterized as opposite the other-vehicle (22) in response to a determination that the other-vehicle (22) is off-center.

12. The method (100) in accordance with any of the previous claims, wherein the method (100) includes
accessing a digital-map (56) that indicates a location of an object (58); and
operating the steering-device (24) to steer the host-vehicle (12) to an off-center-position (40) where the perception-sensor (14) has a view of the object (58).

13. The method (100) in accordance with any of the previous claims, wherein the perception-sensor (14) includes
a camera (14A) and a radar-unit (14B); and
the method (100) includes
determining a second-distance (64) to a second-vehicle (62) detected by the radar-unit (14B), said second-vehicle (62) traveling in the travel-lane (18) of the other-vehicle (22), wherein a view of the second-vehicle (62) is characterized as blocked by the other-vehicle (22); and ope
rating the steering-device (24) to steer the host-vehicle (12) to an off-center-position (40) where the camera (14A) has a view of the second-vehicle (62) in response to a determination that a second-distance (64) to the second-vehicle (62) is less than a second-threshold (66).

14. A first device (30) comprising:
one or more processors (32);
memory (34); and
one or more programs (105) stored in memory (34), the one or more programs (105) including instructions for performing the method (100) of any one of claims 8-13.

15. A non-transitory computer-readable storage-medium (34) comprising one or more programs (105) for execution by one or more processors (32) of a first device (30), the one or more programs (105) including instructions which, when executed by the one or more processors (32), cause the first device (30) to perform the method (100) of any one of claims 8-13.
